# EUROPÄISCHE PATENTANMELDUNG

(11) **EP 0 591 564 A1**
(43) Veröffentlichungstag der Anmeldung: **13.04.1994**
(21) Anmeldenummer: 92116957.9
(22) Anmeldetag: 05.10.1992
(51) Int. Cl.: G01L 19/14, G01L 7/04

(54) **Manometer**

(71) Anmelder: WIKA ALEXANDER WIEGAND GmbH & CO., D-63911 Klingenberg (DE)
(72) Erfinder: Julien, H., W-8763 Klingenberg (DE); Schneider, K., W-8763 Klingenberg (DE); Klappauf, H.J., W-8751 Elsenfeld (DE)
(74) Vertreter: Grams, Klaus Dieter, Dipl.-Ing.

(57) **Zusammenfassung**

Das Manometer hat ein Gehäuse (4), das eine im wesentlichen kreiszylindrische Umfangswand (6) sowie eine Rückwand (8) aufweist, ein innerhalb des Gehäuses angeordnetes Meßsystem (20), eine Sichtscheibe (34), die das Gehäuse an dessen Vorderseite schließt, eine bruchsichere Trennwand (42), die im Gehäuse eine Kammer, in der das Meßsystem angeordnet ist, von einer weiteren Kammer trennt, die durch die Sichtscheibe hindurch sichtbar ist, sowie einen ausblasbaren Gehäusewandabschnitt (22). Die bruchsichere Trennwand (42) ist ein zunächst von der Umfangswand des Gehäuses getrennt gefertigtes Teil, das erst nach der Montage und Justage des Meßsystems im Gehäuse von vorne in das Gehäuse eingesetzt wird und an der Umfangswand des Gehäuses mit Hilfe von Befestigungsmitteln befestigt wird. Es kann somit trotz des Vorhandenseins der bruchsicheren Trennwand die Montage des Meßsystems von der Vorderseite des Gehäuses aus erfolgen, und auch die Justagearbeiten am montierten Meßsystem können von der Vorderseite aus durchgeführt werden. Zudem ist es nicht mehr notwendig, daß die gesamte Rückwand den ausblasbaren Gehäusewandabschnitt bildet.

## Beschreibung

Die Erfindung bezieht sich auf ein Manometer gemäß dem Oberbegriff von Patentanspruch 1.

Ein solches Manometer ist bekannt (DE-A-34 09 137). Dieses bekannte Manometer weist eine bruchsichere Trennwand auf, die den Anwender schützen soll, wenn das Meßorgan, meist eine Rohrfeder, undicht wird und die Gefahr besteht, daß Teile des Manometers durch dessen Vorderseite austreten. Ebenfalls dem Schutz des Anwenders dient ein ausblasbarer Gehäusewandabschnitt, der ausgeblasen wird bei einem Druck, der deutlich unterhalb desjenigen Drucks liegt, bei dem die Sichtscheibe des Manometers bersten würde.

Bei dem bekannten Manometer ist die bruchsichere Trennwand einstückig mit der Umfangswand des Gehäuses ausgebildet. Die gesamte Rückwand des Gehäuses bildet den ausblasbaren Gehäusewandabschnitt. Wegen der einstückigen Ausbildung der bruchsicheren Trennwand und der Umfangswand des Gehäuses ist die Montage des Meßsystems im Gehäuse erschwert und muß sie zudem stets von der Rückseite des Gehäuses aus erfolgen. Auch das Justieren des bekannten Manometers bzw. seines Meßsystems ist erschwert, da nach der Montage des Meßsystems im Gehäuse das Meßsystem nur noch von hinten zugänglich ist, die Beobachtung des Zeigerweges während der Justage und das Aufsetzen des Zeigers aber von vorne erfolgen müssen.

Um die Montage des Meßsystems im Gehäuse sowie die Justage des Meßsystems bei einem Manometer mit einer bruchsicheren Trennwand zu erleichtern, ist es ferner bekannt (DE-GM-71 48 174), die bruchsichere Trennwand einstückig mit einem ringförmigen Abschnitt der Umfangswand des Gehäuses auszubilden und einen weiteren ringförmigen Abschnitt der Umfangswand erst nach erfolgter Montage des Meßsystems an der bruchsicheren Trennwand mit letzterer zu verbinden. Auch in diesem bekannten Fall ist jedoch das Justieren des Meßsystems durch die vor diesem angeordnete, bruchsichere Trennwand behindert. Zudem ist insbesondere bei flüssigkeitsgefüllten Manometern der letztgenannten Bauart nachteilig, daß zusätzliche Dichtungsmaßnahmen zwischen den beiden ringförmigen Abschnitten der Umfangswand getroffen werden müssen und daß die Durchführung des Systemträgers durch die zusammengesetzte Umfangswand durch eine geteilte Öffnung hindurch erfolgt, was ebenfalls die Abdichtung erschwert.

Der Erfindung liegt die Aufgabe zugrunde, das gattungsgemäße Manometer dahingehend weiterzubilden, daß die Montage des Meßsystems im Gehäuse sowie die Justage des Meßsystems nach erfolgter Montage erleichtert sind.

Diese Aufgabe wird erfindungsgemäß dadurch gelöst, daß die bruchsichere Trennwand ein von der Umfangswand des Gehäuses getrennt gefertigtes Teil ist, daß die bruchsichere Trennwand von vorne in das Gehäuse eingesetzt worden ist und daß sie an der Umfangswand mit Hilfe von Befestigungsmitteln befestigt worden ist.

Die erfindungsgemäße Ausbildung des Manometers ermöglicht es, das Meßsystem im Gehäuse zu Montieren, bevor die bruchsichere Trennwand am Gehäuse befestigt wird. Daher kann das Meßsystem während der Montage von vorne in das Meßsystem eingeführt werden und können die Montagearbeiten durch die Vorderseite hindurch aufgeführt werden. Selbst nach der Montage des Meßsystems im Gehäuse ist das Meßsystem noch von vorne zugänglich, so daß alle Justagearbeiten von der Vorderseite aus ausgeführt werden können, von der aus auch die Beobachtung des Zeigerweges während der Justage erfolgt. Es sind somit bei dem erfindungsgemäßen Manometer sowohl die Montage des Meßsystems als auch dessen Justage erheblich erleichtert. Erst nach erfolgter Justage des Meßsystems wird die bruchsichere Trennwand von vorne in das Gehäuse eingesetzt und mit Hilfe der Befestigungsmittel befestigt.

In vorteilhafter Ausbildung der Erfindung kann vorgesehen sein, daß die Trennwand scheibenförmig ist und einen im wesentlichen kreisringförmigen Randabschnitt aufweist. Vorzugsweise sind paarweise angeordnete, über den Umfang der Umfangswand verteilte, erste und zweite Vorsprünge an der Umfangswand befestigt, die von letzterer radial nach innen vorstehen. Jeweils ein erster und ein zweiter Vorsprung liegen am Randabschnitt der Trennwand an und schließen diesen zwischen sich ein. Der Randabschnitt der Trennwand weist vorzugsweise von seinem Umfang aus radial nach innen verlaufende Ausnehmungen auf, deren Anzahl, Form und Verteilung über den Trennwand-Umfang der Anzahl, Form und Verteilung über die Umfangswand der zweiten Vorsprünge entsprechen, die jeweils an der Vorderseite des Randabschnitts anliegen. Die Trennwand wird dabei in das Gehäuse von dessen Vorderseite aus dadurch eingesetzt, daß die zweiten Vorsprünge durch die Ausnehmungen geführt werden und die Trennwand soweit in das Gehäuse eingeschoben wird, bis ihr Randabschnitt an den ersten Vorsprüngen anliegt. Danach wird die Trennwand relativ zur Umfangswand gedreht, bis am Randabschnitt der Trennwand ausgebildete und an der Umfangswand angeordnete Anschläge in Anlage aneinander gekommen sind und in dieser Lage die Trennwand ihre Sollstellung einnimmt. In dieser Sollstellung wird die Trennwand vorzugsweise gesichert durch weitere radiale Vorsprünge, die einerseits am Randabschnitt der Trennwand und andererseits an der Umfangswand des Gehäuses angeordnet sind und währen der Drehung der Trennwand in ihre Sollstellung einander berührend aneinander vorbeigleiten und einander hintergreifen, wenn die Trennwand bei ihrer Drehung ihre Sollstellung erreicht hat.

Die dritten und die vierten Vorsprünge können derart ausgebildet sein, daß sie in ihrer Eingriffsstellung eine Rückdrehung der Trennwand verhindern. Vorzugsweise sind jedoch die dritten und vierten Vorsprünge derart ausgebildet, daß sie eine Rückdrehung der Trennwand aus der Sollstellung heraus ermöglichen, wobei dies allerdings nur unter Überwindung eines bestimmten Drehwiderstandes möglich ist. Im Falle dieser bevorzugten Ausbildung kann somit die bruchsichere Trennwand ausgebaut werden, was es ermöglicht, Teile des Meßsystems oder sogar das gesamte Meßsystem zu demontieren um beispielsweise schadhafte Elemente des Meßsystems erneuern oder Teile des Meßsystems reparieren zu können.

Da die erfindungsgemäße Ausbildung des Manometers es ermöglicht, das Meßsystem von vorne zu montieren, braucht bei dem erfindungsgemäßen Manometer nicht die gesamte Rückwand den ausblasbaren Gehäusewandabschnitt zu bilden. In vorteilhafter Weiterbildung der Erfindung kann daher vorgesehen sein, daß der aufblasbare Gehäusewandabschnitt nur durch einen Teilbereich der Rückwand des Gehäuses gebildet ist und daß der übrige Teilbereich der Rückwand des Gehäuses einstückig mit dessen Umfangswand ausgebildet ist. Dieser einstückig mit der Umfangswand des Gehäuses ausgebildete Teilbereich kann beispielsweise 50 % der Fläche der Rückwand ausmachen. Er erhöht nicht nur die Festigkeit des Gehäuses, sondern bringt insbesondere den Vorteil mit sich, daß der Systemträger durch diesen zweiten Teilbereich der Rückwand hindurch nach außen verlaufen und an ihm befestigt sein kann. Durch die Erfindung in ihrer vorstehend beschriebenen bevorzugten Ausführungsform ist somit die Möglichkeit geschaffen worden, den Systemträger durch die Rückwand des Gehäuses zu führen, so daß ein rückseitiger Anschluß möglich ist.

Weitere vorteilhafte Ausgestaltungen der Erfindung ergeben sich aus den Unteransprüchen sowie der folgenden Beschreibung von Ausführungsbeispielen.

Ausführungsbeispiel der Erfindung sind in den Zeichnungen dargestellt und werden im folgenden näher erläutert. Es zeigen:
Fig. 1 eine teilweise aufgebrochene Vorderansicht eines Manometers gemäß einer ersten Ausführungsform;
Fig. 2 eine Schnittdarstellung des Manometers gemäß A-B in Fig. 1;
Fig. 3 eine Draufsicht auf das Manometer gemäß Fig. 1;
Fig. 4 eine Vorderansicht des Gehäuses des Manometers gemäß Fig. 1;
Fig. 5 eine Schnittdarstellung gemäß C-D in Fig. 4, wobei zusätzlich in der Schnittdarstellung gemäß Fig. 5 eine Trennwand dargestellt ist;
Fig. 6 eine Vorderansicht der Trennwand des Manometers gemäß Fig. 1;
Fig. 7 eine Schnittdarstellung gemäß E-F in Fig. 6;
Fig. 8 eine Vorderansicht eines Befestigungsteils des Manometers gemäß Fig. 1;
Fig. 9 eine Ansicht des Befestigungsteils aus Richtung Y in Fig. 8;
Fig. 10 eine Schnittdarstellung des Befestigungsteils gemäß G-H in Fig. 9;
Fig. 11 eine vergrößerte Darstellung einer Einzelheit X in Fig. 6, wobei zusätzlich eines der zugeordneten Befestigungsteile dargestellt ist;
Fig. 12 eine Fig. 4 ähnliche Vorderansicht eines Gehäuses eines Manometers gemäß einer zweiten Ausführungsform;
Fig. 13 eine Fig. 5 ähnliche Schnittdarstellung gemäß I-K in Fig. 12.

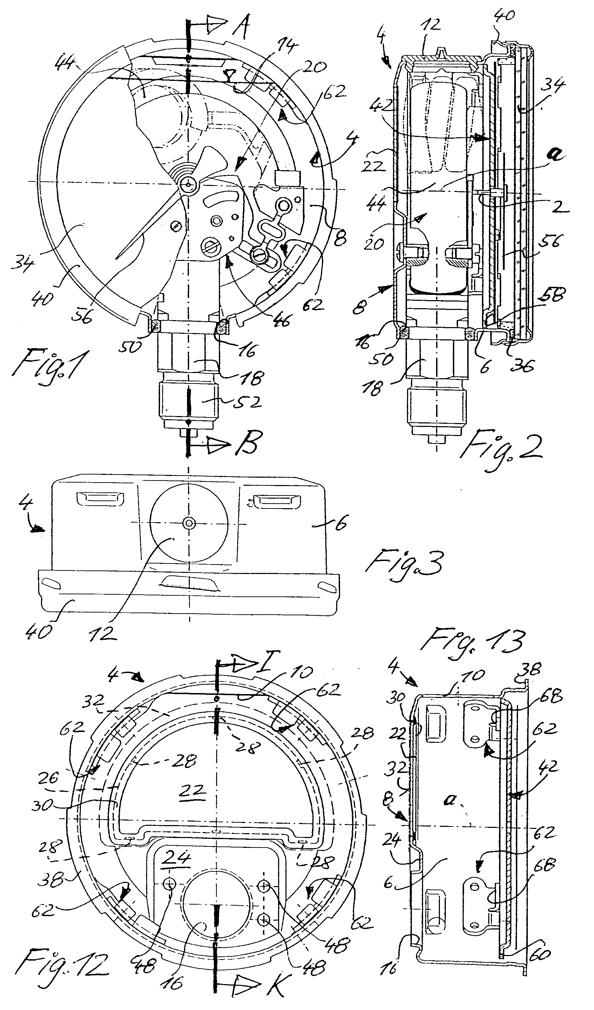

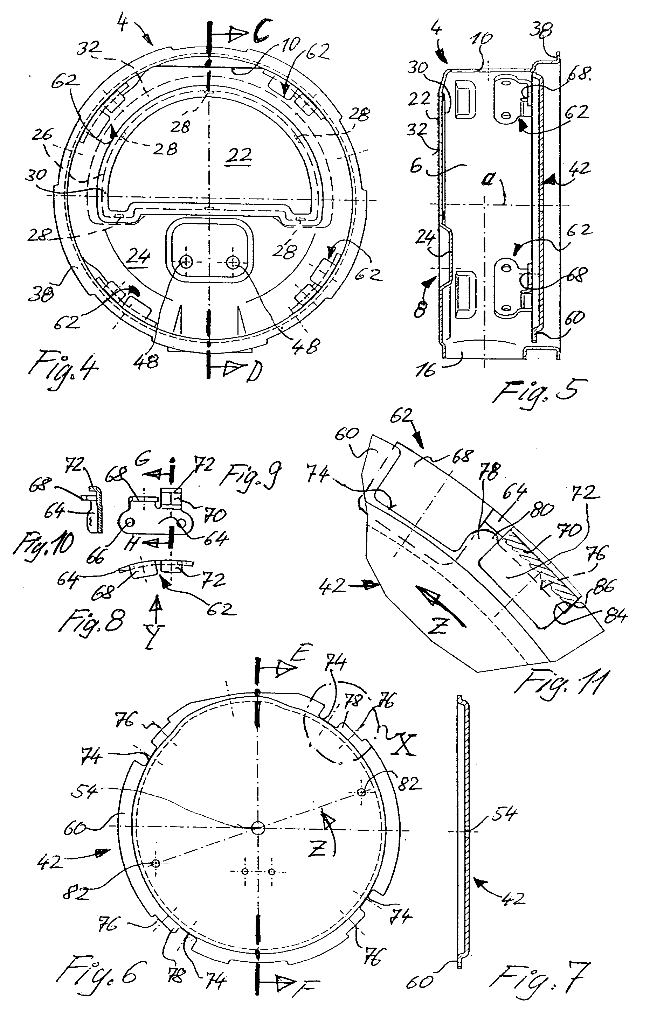

Bei dem in den Figuren 1 bis 11 dargestellten Manometer handelt es sich um ein flüssigkeitsgefülltes Manometer in Sicherheitsausführung. Die Vorderseite dieses Manometers befindet sich rechts in Fig. 2; seine Rückseite befindet sich links in Fig. 2. Im folgenden verwendete Begriffe wie "vorne" und "hinten" sowie sinnverwandte Begriffe beziehen sich auf diese Festlegung. Das Manometer weist eine Achse a (Fig. 2) auf, die bei den dargestellten Ausführungsbeispielen koaxial zu einer Zeigerwelle 2 verläuft. Im folgenden verwendete Begriffe wie "radial nach innen" und "radial nach außen" sowie sinnverwandte Begriffe beziehen sich auf diese Achse a.

Die Figuren 1 bis 3 zeigen das Manometer gemäß der ersten Ausführungsform. Dieses umfaßt ein Gehäuse 4, das eine im wesentlichen kreiszylindrische Umfangswand 6 sowie eine im wesentlichen ebene Rückwand 8 aufweist. Die Umfangswand weist oben (in den Figuren 1, 2, 4 und 5) eine Öffnung 10 auf, die durch einen Stopfen 12 verschlossen ist und zum Einfüllen einer Flüssigkeitsfüllung dient, die das Innere des Manometers bis zu einer Füllhöhe 14 füllt. Unten ist die Umfangswand 6 mit einer kreisförmigen Öffnung 16 versehen, durch die hindurch ein Systemträger 18 eines Meßsystems 20 verläuft.

Die Rückwand 8 des Gehäuses, deren Vorderansicht am besten in Figur 4 erkennbar ist, besteht aus zwei Teilbereichen, nämlich einem ersten Teilbereich, der einen ausblasbaren Rückwandabschnitt 22 bildet, sowie einem zweiten Teilbereich 24. Der ausblasbare Rückwandabschnitt 22 hat die Form eines Kreisabschnitts mit einem Zentriwinkel von im wesentlichen 180° und nimmt im wesentlichen die obere Hälfte der Rückwand 8 ein. Der zweite Teilbereich 24 besteht aus der restlichen Rückwand 8 und hat die Form eines weiteren Kreisabschnitts, der übergeht in einen den ausblasbaren Gehäusewandabschnitt 22 umgebenden Kreisringabschnitt, wie dies in Figur 4 gezeigt ist. Der zweite Teilbereich 24 ist einstückig mit der Umfangswand 6 des Gehäuses ausgebildet, das beim dargestellten Ausführungsbeispiel aus Metallblech gefertigt ist.

Zwischen dem ausblasbaren Gehäusewandabschnitts 22 und dem zweiten Teilbereich 24 verläuft ein sehr schmaler, in Figur 4 gestrichelt dargestellter Schlitz 26. Am zweiten Teilbereich 24 der Rückwand 8 sind an den in Figur 4 dargestellten Stellen kleine Stege 28 angeformt, an denen der ausblasbare Gehäusewandabschnitt 22 anliegt und die verhindern, daß der Gehäusewandabschnitt 22 in das Innere des Gehäuses 4 gedrückt werden kann. Abgedichtet und überdeckt ist der Schlitz 26 auf der Innenseite der Rückwand 8 mittels einer Raupe 30 aus gummielastischem Material, beispielsweise aus Silikonkautschuk, die entlang dem Schlitz 26 verläuft. Auf der Außenseite der Rückwand 8 sind der ausblasbare Gehäusewandabschnitt 22 und der Schlitz 2 abgedeckt mittels einer aufgeklebten Folie 32, deren Umriß in Figur 4 durch eine gestrichelte Linie gezeigt ist.

Bei dem beschriebenen Ausführungsbeispiel ist der ausblasbare Gehäusewandabschnitt 22 ein von der übrigen Rückwand 8 zunächst getrennt gefertigtes Bauteil aus Blech, das in die Rückwand 8 eingesetzt worden ist und dann mittels der Stege 28, der Raupe 30 und der Folie 32 fixiert und abgedichtet worden ist. Der ausblasbare Gehäusewandabschnitt 22 kann jedoch auch dadurch hergestellt werden, daß der Schlitz 26 auf geeignete Weise, beispielsweise mittels eines Laserstrahls, in die Rückwand 8 geschnitten wird, wobei den Stegen 28 entsprechende Bereiche stehengelassen werden, die den ausblasbaren Gehäusewandabschnitt mit der übrigen Rückwand 8, d.h. dem zweiten Teilbereich 24, verbunden halten.

Der ausblasbare Gehäusewandabschnitt 22 erfüllt eine Sicherheitsfunktion und wird aus der Rückwand 8 nach hinten ausgeblasen, wenn der Druck im Inneren des Gehäuses 4 einen vorbestimmten Wert übersteigt, so daß der im Inneren des Gehäuses 4 herrschende, unerwünscht hohe Druck abgebaut werden kann.

An seiner Vorderseite ist das Manometer mittels einer im dargestellten Fall aus Zweischeiben-Sicherheitsglas bestehenden Sichtscheibe 34 verschlossen. Die Sichtscheibe 34 liegt über einen zwischengefügten Dichtungsring 36 an einem Flansch 38 am vorderen Rand der Umfangswand 6 an. Gehalten und gesichert wird die Sichtscheibe 34 am Gehäuse 4 mittels eines den Flansch 38 hintergreifenden Bajonettrings 40, so daß die Sichtscheibe 34 lösbar angebracht ist und durch Lösen des Bajonettrings 40 das Gehäuse 4 auf seiner Vorderseite geöffnet werden kann.

Alternativ zum beschriebenen Bajonettring 40 kann ein Gewindering vorgesehen sein, der ebenfalls ein Öffnen der Vorderseite des Gehäuses 4 ermöglicht. Weitere Alternativen zur Befestigung der Sichtscheibe 34 am Gehäuse 4 sind an sich bekannt und werden hier nicht naher erläutert.

Das Innere des Gehäuses 4 ist mittels einer bruchsicheren Trennwand 42 in eine vordere und eine hintere Kammer unterteilt. In der hinteren Kammer ist das Meßsystem 20 angeordnet, das außer dem Systemträger 18 ein Meßorgan 44 und ein Zeigerwerk 46 umfaßt. Das Meßorgan 44 ist beim dargestellten Ausführungsbeispiel eine kreisförmige Rohr- bzw. Bourdonfeder. Es kann jedoch auch eine andere Ausbildung haben und beispielsweise als schraubenförmige Rohrfeder ausgebildet sein, wie dies in den Figuren 1 und 2 als Alternative strichpunktiert angedeutet ist. Das Meßorgan 44 ist auf an sich bekannte Weise mit dem Zeigerwerk 46 verbunden, das auf ebenfalls an sich bekannte Weise eine Auslenkung des freien Endes des Meßorgans 44 in eine Drehung der Zeigerwelle 2 umwandelt. Der Systemträger 18 ist am zweiten Teilbereich 24 der Rückwand 8 mit Hilfe von Schrauben befestigt, die durch Öffnungen 48 in der Rückwand 8 verlaufen (siehe Figuren 2 und 4). Ferner verläuft der Systemträger 18 durch die Öffnung 16 der Umfangswand 6 zur Außenseite des Gehäuses 4, wobei in der Öffnung 16 zwischen dem Systemträger 18 und der Umfangswand 6 ein Dichtungsring 50 angeordnet ist. An seinem unteren Ende weist der Systemträger 18 ein Außengewinde 52 auf, mit Hilfe dessen das Manometer angeschlossen wird.

Bei dem dargestellten und vorstehend beschriebenen Ausführungsbeispielen ist somit der Systemträger 18 lösbar mit dem Gehäuse 4 verbunden; wenn es erforderlich sein sollte, kann jedoch der Systemträger 18 mit der Umfangswand 4 auch verschweißt sein, wobei dann die Lösbarkeit der Verbindung nicht mehr gegeben ist.

Die Zeigerwelle 2 ragt durch eine mittige Bohrung 54 in der Trennwand 42 in die vordere, in Figur 2 rechte Kammer innerhalb des Gehäuses 4. Auf das vordere Ende der Zeigerwelle 2 ist ein Zeiger 56 gesteckt. Auf der Vorderseite der Trennwand 42 ist ein Zifferblatt 58 befestigt. Die Stellung des Zeigers 56 vor dem Zifferblatt 58 kann somit durch die Sichtscheibe 34 hindurch beobachtet und abgelesen werden.

Die bruchsichere und scheibenförmige Trennwand 42 weist einen kreisringförmigen Randabschnitt 60 auf, an dem noch näher zu erläuternde Befestigungsmittel angreifen, um die Trennwand 42 am Gehäuse 4 festzuhalten. Der vom Randabschnitt 60 umgebene Bereich der Trennwand 42 ist als ebene Platte ausgebildet, die relativ zum Randabschnitt 60 in Axialrichtung etwas versetzt ist, wie dies Figur 7 zeigt. Die gesamte Trennwand 42 ist einstückig aus einem hinreichend festen Material ausgebildet, wobei die Dimensionierung derart erfolgt ist, daß die Trennwand 42 selbst dann nicht bricht, wenn das Meßorgan 44 bricht und dadurch möglicherweise Teile des Manometers in Richtung nach vorne gegen die Trennwand 42 geschleudert werden.

Im folgenden werden die Befestigungsmittel für die Trennwand 42 ausführlicher erläutert. Gleichmäßig verteilt über den Umfang der Umfangswand 6 sind an letzterer vier Befestigungsteile 62 in den Figuren 4 und 5 dargestellter Weise angeordnet. Die vier Befestigungsteile 62 haben sämtlich gleiche Ausbildung. Sie werden im folgenden insbesondere unter Bezugnahme auf die Figuren 8 bis 10 näher erläutert.

Jedes Befestigungsteil 62 umfaßt eine Platte 64, die entsprechend der Krümmung der zylindrischen Umfangswand 6 gekrümmt ist. Die Platte 64 weist zwei Buckel 66 auf, mit deren Hilfe die Befestigungsteile 62 an der Umfangswand 66 angeschweißt sind.

Einstückig ausgebildet mit jeder Platte 64 ist ein plattenförmiger, erster Vorsprung 68, der von der Umfangswand 6 des Gehäuses 4 radial nach innen vorsteht und an der Rückseite des Randabschnitts 60 anliegt, wenn die Trennwand 42 in ihrer Sollstellung im Gehäuse 4 befestigt ist. Dies ist insbesondere in Figur 5, aber auch in Figur 11 erkennbar. Die Trennwand 42, die den Figuren 1 und 4 der Übersichtlichkeit halber weggelassen ist, ist in den Figuren 2 und 5 in ihrer Sollstellung relativ zum Gehäuse 4 dargestellt. Die Sollstellung der Trennwand 42 ist diejenige Stellung, die die Trennwand 42 im fertig monierten Manometer haben soll und bei korrekter Montage einnimmt.

Ferner einstückig angeformt an der Platte 64 ist eine Leist 70, die in Umfangsrichtung neben dem ersten Vorsprung 68 angeordnet ist und relativ zur Platte 64 etwas radial nach innen versetzt ist, wie dies Figur 10 zeigt. Am vorderen Ende der Leiste 70 ist an dieser ein plattenförmiger, zweiter Vorsprung 72 angeformt, der ebenfalls von der Umfangswand des Gehäuses aus radial nach innen vorsteht, jedoch in Radialrichtung nach innen eine geringere Länge als der erste Vorsprung 68 hat. Der zweite Vorsprung 72 ist um die Dicke des Randabschnitts 60 weiter vorne angeordnet als der erste Vorsprung 68, so daß der zweite Vorsprung 72 an der Vorderseite des Randabschnitts 60 der Trennwand 42 anliegt, wenn diese ihre Sollstellung einnimmt. Dies heißt mit anderen Worten, daß jeweils ein erster Vorsprung 68 und ein zweiter Vorsprung 72 zwischen sich den Randabschnitt 60 einschließen, so daß die jeweils aus einem ersten Vorsprung 68 und einem zweiten Vorsprung 72 gebildeten Vorsprungpaare die bruchsichere Trennwand 42 sowohl an einer Verschiebung in Axialrichtung nach vorne als auch an einer Verschiebung in Axialrichtung nach hinten hindern und somit eine Axialsicherung für die Trennwand 42 bilden. Es versteht sich, daß die Befestigungsteile 62 mit ihren ersten und ihren zweiten Vorsprüngen derart dimensioniert sind, daß sie den Kräften standhalten können, die auf die bruchsichere Trennwand 42 wirken, wenn der Schadensfall eintritt, für den letztere ausgelegt ist.

Die Leiste 70 der Befestigungsteile 62 ist ferner Element einer Drehsicherung für die bruchsichere Trennwand 42, die weiter unten erläutert wird.

Der Randabschnitt 60 der bruchsicheren Trennwand 42 ist an vier Orten, die den Orten der vier an der Umfangswand 6 befestigten ersten Vorsprünge 68 entsprechen, mit vom Umfang des Randabschnitts 60 aus radial nach innen verlaufenden, ersten Ausnehmungen 64 versehen. Die Form einer jeden ersten Ausnehmung 64 ist derart auf die Form eines jeden zweiten Vorsprungs 72 abgestimmt, daß dann, wenn die Trennwand 42 in bestimmter Drehstellung relativ zum Gehäuse 4 in letzteres von seiner Vorderseite aus eingeschoben wird, die zweiten Vorsprünge 72 mit geringem Spiel durch die ersten Ausnehmungen 74 hindurchtreten können. Dabei wird die Trennwand 42 in das Gehäuse eingeschoben, bis die Rückseite des Randabschnitts 60 an den ersten Vorsprüngen 68 anliegt.

In Umfangsrichtung neben jeder ersten Ausnehmung 74 ist eine radial nach innen verlaufende zweite Ausnehmung 76 ausgebildet. Diese zweite Ausnehmung 76 ist in Radialrichtung nach innen weniger tief als die erste Ausnehmung 74 und hat eine solche Form, daß durch die zweite Ausnehmung 76 hindurch die Leiste 70 verlaufen kann (siehe Figur 11), wenn die Trennwand 42 ihre Sollstellung einnimmt, wobei dann die radial innenliegende Oberfläche der Leiste 70 den Boden der zweiten Ausnehmung 76 berührt. Am Übergang zwischen der ersten Ausnehmung 74 und der zweiten Ausnehmung 76 ist ein radial nach außen vorstehender, dritter Vorsprung 78 ausgebildet, der radial etwas weiter nach außen ragt als der Boden der zweiten Ausnehmung 76. Der dritte Vorsprung 78 weist sowohl auf seiner der ersten Ausnehmung 74 zugewandten Seite als auch auf seiner der zweiten Ausnehmung 76 zugewandten Seite eine abgerundete Schulter 80 auf.

Jeder dritte Vorsprung 78 wirkt mit einer der Leisten 70 zusammen, die jeweils einen von der Umfangswand aus radial nach innen vorstehenden, vierten Vorsprung bilden. Wenn die bruchsichere Trennwand 42 in vorstehend beschriebenen Weise soweit in das Gehäuse 4 eingeschoben worden ist, daß die Rückseite des Randabschnitts 60 an den ersten Vorsprüngen 68 anliegt, sind zunächst die Leisten 70 in den ersten Ausnehmungen 74 angeordnet. Danach wird dann die Trennwand 72 in Richtung eines Pfeiles Z gedreht, wozu in zwei Bohrungen 82 der Trennwand 42, die als Werkzeugangriffsflächen dienen, ein geeignetes Werkzeug eingesetzt wird. Aufgrund dieser Drehung treten die den vierten Vorsprung bildende Leist 70 und der dritte Vorsprung 78 in Berührung miteinander, wobei die Leiste 70 über die gekrümmte, vordere Schulter des dritten Vorsprungs 78 auf diesen aufgleitet. Dies geschieht unter elastischer Verformung der Leiste 70 entgegen einem dieser Verformung entsprechenden Widerstand. Schließlich gleitet die Leiste 70 vom dritten Vorsprung 78 herab in die zweite Ausnehmung 76, so daß die Leiste 70 die in Figur 11 dargestellte Stellung einnimmt, die der Sollstellung der Trennwand 42 zugeordnet ist. Dabei hintergreifen der dritte Vorsprung 78 und der durch die Leiste 70 gebildete vierte Vorsprung einander, so daß die Trennwand 42 gegen eine Rückdrehung gesichert ist. Wäre die der Leist 70 in dieser Stellung zugewandte Schulter 80 des dritten Vorsprungs 78 als radial verlaufender Anschlag ausgebildet, so wäre eine Rückdrehung der Trennwand 42 unmöglich und die Trennwand 42 schließlich unlösbar mit der Umfangswand 46 verbunden. Beim dargestellten Ausführungsbeispiel ist jedoch auch die der zweiten Ausnehmung 76 zugewandte Schulter 80 des dritten Vorsprungs 78 gerundet, so daß unter Überwindung eines gewissen Drehwiderstandes eine Rückdrehung der Trennwand 42 möglich ist und die Verbindung zwischen der Trennwand 42 und der Umfangswand 6 eine lösbare ist.

Ein Weiterdrehen der Trennwand 42 über die in Figur 11 dargestellt Sollstellung hinaus verhindern ein erster Anschlag 84 und ein zweiter Anschlag 86, die in der Sollstellung der Trennwand in Anlage aneinander stehen. Der erste Anschlag 84 befindet sich am Randabschnitt 60 der Trennwand 42 und ist durch den vom dritten Vorsprung 78 abgewandten, radial verlaufenden Rand der zweiten Ausnehmung 76 gebildet. Der zweite Anschlag 86 ist an der Umfangswand 6 befestigt und ist durch den dem ersten Anschlag 84 zugewandten Rand der Leiste 70 gebildet.

Wie sich aus der vorstehenden Erläuterung ergibt, bilden der dritte Vorsprung 78 zusammen mit dem vierten Vorsprung in Form der Leiste 70 sowie der erste Anschlag 84 zusammen mit dem zweiten Anschlag 86 eine Drehsicherung für die Trennwand 42. Es versteht sich, daß die Anzahl der Vorsprungspaare aus ersten und zweiten Vorsprüngen einerseits von der Anzahl der die Drehsicherung bildenden Paare aus dritten und vierten Vorsprüngen sowie ersten und zweiten Anschlägen verschieden sein kann. Bei dem in Figur 6 dargestellten Ausführungsbeispiel der Trennwand 42 sind dritte Vorsprünge 78 lediglich rechts oben und links unten vorgesehen. Erste Anschläge 84 dagegen sind in allen vier Quadranten der Figur 6 vorgesehen.

Bei dem vorbeschriebenen Ausführungsbeispiel werden während des Drehens der Trennwand 42 in ihre Sollstellung die Leisten 70 elastisch verformt, wozu Raum durch den leichten radialen Versatz der Leiste 70 geschaffen ist. Ein solcher radialer Versatz ist jedoch nicht notwendig. Die Leisten 70 können ebenso wie die Platten 64 unmittelbar an der Innenseite der Umfangswand 6 anliegen. Während des Drehens der Trennwand 42 in ihre Sollstellung wird dann die Umfangswand selber elastisch verformt. Alternativ kann auch eine solche Ausbildung vorgesehen sein, daß die dritten Vorsprünge 78 elastisch verformbar sind.

Die vorstehend bereits im Zusammenhang mit der konstruktiven Gestaltung der Bauteile beschriebene Montage der bruchsicheren Trennwand 42 erfolgt, nachdem zuvor das gesamte Meßsystem 20 im Gehäuse 4 montiert und justiert worden ist. Diese Montage- und Justagearbeiten werden demzufolge in keiner Weise durch die Trennwand 42 behindert. Da bei dem beschriebenen und bevorzugten Ausführungsbeispiel die Trennwand 42 lösbar mit dem Gehäuse 4 verbunden ist, kann sie nach der Fertigmontage des Manometers zu einem gewünschten späteren Zeitpunkt ausgebaut werden, so daß das Meßsystem 20 zugänglich ist und entweder Teile des Meßsystems oder das gesamte Meßsystem aus dem Gehäuse 4 ausgebaut werden können, um Reparaturarbeiten auszuführen oder Teile zu erneuern.

Dies ermöglicht es zum Beispiel, im Falle einer durch den Dichtungsring 50 verursachten Undichtheit die Brauchbarkeit des Manometers dadurch wieder herzustellen, daß lediglich der vergleichsweise billige Dichtungsring 50 erneuert wird. Nach erfolgten Reparatur- bzw. Austauscharbeiten wird die bruchsichere Trennwand 42 auf vorstehend beschriebener Weise wiederum eingesetzt und befestigt, so daß das Manometer seine gewünschten Sicherheitseigenschaften hat.

In den Figuren 12 und 13 sowie der folgenden Erläuterung derselben sind gleiche Bezugszeichen für gleiche bzw. entsprechende Teile wie in den Figuren 1 bis 11 und bei deren Erläuterung verwendet.

Die Figuren 12 und 13 zeigen in ähnlicher Weise wie die Figuren 4 und 5 das Gehäuse einer zweiten Ausführungsform des Manometers. Diese zweite Ausführungsform des Manometers unterscheidet sich von der erstbeschriebenen dadurch, daß der (in den Figuren 12 und 13 nicht dargestellte) Systemträger durch den zweiten Teilbereich 24 der Rückwand 8 des Gehäuses nach außen verläuft. Zu diesem Zweck ist die Öffnung 16 im zweiten Teilbereich 24 ausgebildet, während die Umfangswand 6 - anders als bei der ersten Ausführungsform - unten geschlossen ist, wie Figur 13 zeigt. Befestigt ist der Systemträger der zweiten Ausführungsform am zweiten Teilbereich 24 der Rückwand 8, und zwar wiederum mit Hilfe von Schrauben, wozu die Öffnungen 48 in Figur 12 dienen.

Im übrigen hat die zweite Ausführungsform gemäß den Figuren 12 und 13 die gleiche Ausbildung wie die erste Ausbildungsform. Dies gilt insbesondere für die in Verbindung mit der ersten Ausführungsform gemachten Erläuterungen zur bruchsicheren Trennwand 42 und deren Befestigungsmitteln sowie zum ausblasbaren Gehäusewandabschnitt 22.

Die Erfindung ist nicht auf die Einzelheiten der vorstehend beschriebenen Ausführungsform beschränkt.

Vielmehr können im Rahmen der Erfindung zahlreiche Abwandlungen der beschriebenen Einzelheiten vorgenommen werden, wie sie insbesondere auch in den Unteransprüchen angegeben sind.

Das Manometer hat ein Gehäuse, das eine im wesentlichen kreiszylindrische Umfangswand sowie eine Rückwand aufweist, ein innerhalb des Gehäuses angeordnetes Meßsystem, eine Sichtscheibe, die das Gehäuse an dessen Vorderseite schließt, eine bruchsichere Trennwand, die im Gehäuse eine Kammer, in der das Meßsystem angeordnet ist, von einer weiteren Kammer trennt, die durch die Sichtscheibe hindurch sichtbar ist, sowie einen ausblasbaren Gehäusewandabschnitt. Die bruchsichere Trennwand ist ein zunächst von der Umfangswand des Gehäuses getrennt gefertigtes Teil, das erst nach der Montage und Justage des Meßsystems im Gehäuse von vorne in das Gehäuse eingesetzt wird und an der Umfangswand des Gehäuses mit Hilfe von Befestigungsmitteln befestigt wird. Es kann somit trotz des Vorhandenseins der bruchsicheren Trennwand die Montage des Meßsystems von der Vorderseite des Gehäuses aus erfolgen, und auch die Justagearbeiten am montierten Meßsystem können von der Vorderseite aus durchgeführt werden. Zudem ist es nicht mehr notwendig, daß die gesamte Rückwand den ausblasbaren Gehäusewandabschnitt bildet.

## Patentansprüche

1. Manometer mit,
einem Gehäuse (4), das eine im wesentlichen kreiszylindrische Umfangswand (6) sowie eine Rückwand (8) aufweist,
einem innerhalb des Gehäuses angeordneten Meßsystem (20), das ein innen mit dem zu messenden Druck beaufschlagbares Meßorgan (44), ein Zeigerwerk (46) sowie einen Systemträger (18) aufweist, an dem das Meßorgan und das Zeigerwerk befestigt sind und der durch eine der Wände des Gehäuses nach außerhalb desselben verläuft,
einer Sichtscheibe (34), die das Gehäuse an dessen der Rückwand gegenüberliegender Vorderseite schließt,
einem Zifferblatt (58) und einem Zeiger (56), die durch die Sichtscheibe beobachtbar sind,
einer bruchsicheren Trennwand (42), die im Gehäuse zwischen dem Meßsystem einerseits und dem Zifferblatt andererseits angeordnet ist,
und einem ausblasbaren Gehäusewandabschnitt (22), **dadurch gekennzeichnet**, daß die bruchsichere Trennwand (42) ein von der Umfangswand (6) des Gehäuses (4) getrennt gefertigtes Teil ist, von vorne in das Gehäuse eingesetzt ist und an der Umfangswand mit Hilfe von Befestigungsmitteln (68, 70, 72, 78, 84, 86) befestigt ist.

2. Manometer nach Anspruch 1, **dadurch gekennzeichnet**, daß die Trennwand (42) scheibenförmig ist und einen im wesentlichen kreisringförmigen Randabschnitt (60) aufweist.

3. Manometer nach Anspruch 2, **dadurch gekennzeichnet,** daß die scheibenförmige Trennwand (42) Werkzeugangriffsflächen (82) aufweist.

4. Manometer nach Anspruch 3, **dadurch gekennzeichnet**, daß die Befestigungsmittel aus einem Innengewinde auf der Innenseite der Umfangswand (6) sowie einem in das Innengewinde eingreifenden Außengewinde am kreisringförmigen Randabschnitt (60) der Trennwand (42) sowie einer Drehsicherung bestehen.

5. Manometer nach Anspruch 3, **dadurch gekennzeichnet**, daß die Befestigungsmittel ( 68, 70, 72, 78, 84, 86) von der Umfangswand (6) des Gehäuses (4) radial nach innen vorstehende, über den Umfang der Umfangswand verteilte, erste Vorsprünge (68), von der Umfangswand des Gehäuses radial nach innen vorstehende, über den Umfang der Umfangswand verteilte, zweite Vorsprünge (72) sowie eine Drehsicherung (70, 78, 84, 86) umfassen, wobei die ersten Vorsprünge (68) an der Rückseite (60) des Randabschnitts sowie die zweiten Vorsprünge (72) an der Vorderseite des Randabschnitts der Trennwand (40) anliegen.

6. Manometer nach Anspruch 5, **dadurch gekennzeichnet**, daß die ersten Vorsprünge (68) in Radialrichtung nach innen weiter vorstehen als die zweiten Vorsprünge (72).

7. Manometer nach Anspruch 5 oder 6, **dadurch gekennzeichnet**, daß jeweils einer der ersten Vorsprünge (68) zusammen mit einem der zweiten Vorsprünge (72) paarweise angeordnet ist.

8. Manometer nach Anspruch 7, **gekennzeichnet durch** zumindest drei Vorsprungpaare, die gleichmäßig über den Umfang verteilt angeordnet sind.

9. Manometer nach Anspruch 7 oder 8, **dadurch gekennzeichnet**, daß die beiden Vorsprünge (68, 72) eines Vorsprungpaares in Umfangsrichtung der Umfangswand (6) relativ zueinander versetzt angeordnet sind.

10. Manometer nach einem der Ansprüche 5 bis 9, **dadurch gekennzeichnet**, daß die ersten Vorsprünge (68) und die zweiten Vorsprünge (72) unlösbar mit der Umfangswand (6) verbunden sind, wobei diese unlösbare Verbindung bereits vor dem Einsetzen der Trennwand (40) in das Gehäuse (4) hergestellt worden ist und daß der Randabschnitt (60) der Trennwand von seinem Umfang aus radial nach innen verlaufende Ausnehmungen (74) aufweist, deren Anzahl, Form und Verteilung über den Trennwand-Umfang der Anzahl, Form und Verteilung über die Umfangswand der zweiten Vorsprünge (72) entsprechen, wobei die Trennwand (40) in das Gehäuse (4) dadurch eingesetzt worden ist, daß die zweiten Vorsprünge (72) durch die Ausnehmungen (74) geführt worden sind und dann die Trennwand relativ zur Umfangswand gedreht worden ist.

11. Manometer nach Anspruch 10 in Verbindung mit einem der Ansprüche 7 bis 9, **dadurch gekennzeichnet**, daß die zwei Vorsprünge (68, 72) eines jeden Vorsprungpaares einstückig mit einer gekrümmten Platte (64) ausgebildet sind, die mit der Umfangswand (6) unlösbar verbunden ist.

12. Manometer nach Anspruch 11, **dadurch gekennzeichnet**, daß die gekrümmten Platten (64) mit der Umfangswand (6) verschweißt sind.

13. Manometer nach einem der Ansprüche 10 bis 12, **dadurch gekennzeichnet**, daß die Drehsicherung (70, 78, 84, 86) zumindest einen am Randabschnitt (60) der Trennwand (42) ausgebildeten ersten Anschlag (84) und zumindest einen an der Umfangswand (6) des Gehäuses (4) festen zweiten Anschlag (86) sowie zumindest einen vom Randabschnitt (60) der Trennwand radial nach außen vorstehenden dritten Vorsprung (78) und zumindest einen von der Umfangswand (6) des Gehäuses radial nach innen vorstehenden vierten Vorsprung (70) aufweist, wobei die ersten und die zweiten Anschläge (84, 86) derart angeordnet sind, daß einer der ersten Anschläge (84) mit einem der zweiten Anschläge (86) zur Anlage kommt, wenn die Trennwand (42) bei ihrer Drehung ihre Sollstellung erreicht hat, und wobei die dritten und die vierten Vorsprünge (78, 70) derart angeordnet sind, daß einer der dritten Vorsprünge (78) und einer der vierten Vorsprünge (70) während der Drehung der Trennwand in ihre Sollstellung einander berührend aneinander vorbeigleiten und einander hintergreifen, wenn die Trennwand (42) bei ihrer Drehung ihre Sollstellung erreicht hat.

14. Manometer nach Anspruch 13, **dadurch gekennzeichnet**, daß der zumindest eine dritte Vorsprung (78) und der zumindest eine vierte Vorsprung (70) unter in Radialrichtung erfolgender elastischer Verformung des dritten und/oder vierten Vorsprungs oder des den dritten und/oder vierten Vorsprung tragenden Bauteils aneinander vorbeigleiten.

15. Manometer nach Anspruch 14, **dadurch gekennzeichnet**, daß der zumindest eine dritte Vorsprung (78) und der zumindest eine vierte Vorsprung (70) jeweils eine Schulter (80) aufweisen, wobei diese Schultern bei der Sollstellung der Trennwand (42) einander zugewandt sind.

16. Manometer nach Anspruch 15, **dadurch gekennzeichnet**, daß zumindest eine der Schultern (80) derart abgerundet ist, daß eine Rückdrehung der Trennwand (42) aus ihrer Sollstellung heraus möglich ist.

17. Manometer nach einem der Ansprüche 15 oder 16 in Verbindung mit Anspruch 11, **dadurch gekennzeichnet**, daß in Umfangsrichtung neben zumindest einer der Ausnehmungen (74) eine zweite Ausnehmung (76) ausgebildet ist, die in Radialrichtung nach innen weniger tief als die erste Ausnehmung (74) ist, daß zwischen der ersten und der zweiten Ausnehmung der zumindest eine dritte Vorsprung (78) derart ausgebildet ist, daß seine Schulter (80) der zweiten Ausnehmung (76) zugewandt ist, daß der vom dritten Vorsprung (78) abgewandte, radial verlaufende Rand der zweiten Ausnehmung (76) den ersten Anschlag (84) bildet und daß der zweite Vorsprung (72) mit der Platte (64) mittels einer in Axialrichtung verlaufenden Leiste (70) verbunden ist, die bei der Sollstellung der Trennwand (42) in der zweiten Ausnehmung (76) angeordnet ist und selber den vierten Vorsprung bildet, wobei der dem ersten Anschlag (84) zugewandte Rand der Leiste (70) den zweiten Anschlag (86) bildet.

18. Manometer nach Anspruch 17, **dadurch gekennzeichnet**, daß die Leiste (70) bezüglich der Platte (64) radial nach innen versetzt ist.

19. Manometer nach einem der Ansprüche 1 bis 18, **dadurch gekennzeichnet**, daß der ausblasbare Gehäusewandabschnitt (22) durch einen ersten Teilbereich der Rückwand (8) des Gehäuses (4) gebildet ist und daß der übrige, zweite Teilbereich (24) der Rückwand des Gehäuses einstückig mit dessen Umfangswand (6) ausgebildet ist.

20. Manometer nach Anspruch 19, **dadurch gekennzeichnet**, daß der ausblasbare Gehäusewandabschnitt (22) die Form eines Kreisabschnitts mit einem Zentriwinkel von im wesentlichen 180° hat und daß der zweite Teilbereich (24) der Rückwand (8) die Form eines den ausblasbaren Gehäusewandabschnitt (22) umgebenden Kreisringabschnitt in Verbindung mit einem weiteren Kreisabschnitt hat.

21. Manometer nach Anspruch 19 oder 20, **gekennzeichnet durch** einen zwischen dem ausblasbaren Gehäusewandabschnitt (22) und dem zweiten Teilbereich (24) verlaufenden Schlitz (26) sowie mehrere Stege (28), die den Schlitz überbrücken und den ausblasbaren Gehäusewandabschnitt mit dem zweiten Teilbereich (24) verbinden.

22. Manometer nach Anspruch 21, **dadurch gekennzeichnet**, daß die Stege (28) einstückig mit dem ausblasbaren Gehäusewandabschnitt (22) und dem zweiten Teilbereich (24) ausgebildet sind.

23. Manometer nach Anspruch 21 oder 22, **dadurch gekennzeichnet**, daß der Schlitz (26) auf der Innenseite des Gehäuses (4) mittels einer Raupe (30) aus gummielastischem Material abgedeckt ist.

24. Manometer nach einem der Ansprüche 21 bis 23, **dadurch gekennzeichnet**, daß der Schlitz (26) und der ausblasbare Gehäusewandabschnitt (22) auf der Außenseite des Gehäuses (4) mittels einer aufgeklebten Folie (32) abgedeckt sind.

25. Manometer nach einem der Ansprüche 19 bis 24, **dadurch gekennzeichnet**, daß der Systemträger durch den zweiten Teilbereich (24) der Rückwand (8) hindurch nach außen verläuft und am zweiten Teilbereich befestigt ist.

26. Manometer nach einem der Ansprüche 1 bis 24, **dadurch gekennzeichnet**, daß der Systemträger (18) durch die Umfangswand (6) hindurch nach außen verläuft.

27. Manometer nach einem der Ansprüche 1 bis 26, **dadurch gekennzeichnet**, daß das Meßorgan (44) eine Rohrfeder ist.

28. Manometer nach Anspruch 27, **dadurch gekennzeichnet**, daß die Rohrfeder kreisförmig ist.

29. Manometer nach Anspruch 27, **dadurch gekennzeichnet**, daß die Rohrfeder schraubenförmig ist.

30. Manometer nach einem der Ansprüche 1 bis 29, **gekennzeichnet durch** einen Bajonettring (40) zum lösbaren Befestigen der Sichtscheibe (34) am Gehäuse (4).

31. Manometer nach einem der Ansprüche 1 bis 29, **gekennzeichnet durch** einen Gewindering zum lösbaren Befestigen der Sichtscheibe (34) am Gehäuse (4).
